# EUROPEAN PATENT APPLICATION

(11) **EP 4 806 734 A1**
(43) Date of publication of application: **16.09.2026**
(21) Application number: 26164522.0
(22) Date of filing: 13.03.2026
(51) Int. Cl.: B60R 22/46, B60R 22/28

(54) **SEAT BELT RETRACTOR**

(30) Priority: 13.03.2025 CN 202520447411 U
(71) Applicant: Yanfeng International Automotive Technology Co., Ltd., Shanghai 201306 (CN)
(72) Inventor: LIN, Zhihan, Shanghai, 201306 (CN); ZHAO, Wei, Shanghai, 201306 (CN); LIU, Minghao, Shanghai, 201306 (CN)
(74) Representative: Botti & Ferrari S.p.A.

(57) **Abstract**

The present application relates to a seat belt retractor, involving the field of safety technology. The seat belt retractor comprises a pretensioning component and a winding component connected to the pretensioning component. The pretensioning component comprises a stop wheel and a ball gear which is sleeved on the stop wheel in an anti-torsion manner. The stop wheel is provided with a first curved surface, and the ball gear is provided with a second curved surface. The first curved surface and the second curved surface enclose a ball chamber together, the ball chamber is used for accommodating a pretensioning ball. Centers of a plurality of ball chambers are located on a preset plane together. A portion of the second curved surface and the first curved surface are located on one side of the preset plane, and the other portion of the second curved surface is located on the other side of the preset plane. The pretensioning component in the seat belt retractor provided in the present application uses less elements, is easy to assemble and has good reliability.

## Description

### TECHNICAL FIELD

The present application involves the field of safety technology, and in particular relates to a seat belt retractor.

### BACKGROUND ART

In a motor vehicle, a seat belt device is an important part of a vehicle occupant restraint system, which, especially in a traffic accident, can provide protection for vehicle occupants, preventing the occupants from being injured or minimizing injuries. With the development and progress of motor vehicle technology, the requirements for performance of the seat belt device are constantly raising. Some seat belt devices can activate a lock mechanism under predetermined conditions, such that a winding component with the seat belt wound thereon is locked in an unwinding direction.

The existing seat belt devices further include relevant components that achieve pretensioner function for pretensioning the seat belt in emergencies of the vehicle so as to better restrain the vehicle occupants. For example, a seat belt retractor includes a stop wheel, a drive wheel, a winding component, and a gas generator, wherein when the gas generator is ignited, a plurality of steel balls are fired out one after another, which mated with a plurality of ball chambers on the drive wheel such that the drive wheel brings the stop wheel and winding component into retracting motion, thereby achieving pretensioning.

However, the drive wheel in related technologies consists of two elements, both of which are sleeved on the stop wheel and together form ball chambers for accommodating steel balls. Inner wall surfaces of the ball chamber formed respectively by the two elements are spaced apart on both sides of a center point of the ball chamber in axial direction. This type of seat belt retractor has a large number of elements and has poor reliability.

### SUMMARY OF THE INVENTION

The purpose of the present application includes providing a seat belt retractor with simple and reliable structure.

Embodiments of the present application can be implemented as follows:
The present application provides a seat belt retractor, comprising a pretensioning component and a winding component connected to the pretensioning component, the winding component is used for winding a seat belt, the pretensioning component includes a stop wheel and a ball gear, the ball gear is sleeved on the stop wheel in an anti-torsion manner, the stop wheel is provided with a plurality of first curved surfaces arranged in the circumferential direction of the stop wheel, the ball gear is provided with a plurality of second curved surfaces arranged in the circumferential direction of the ball gear, the first curved surfaces and the second curved surfaces are equal in number and correspond one-to-one, each first curved surface and its corresponding second curved surface together enclose a ball chamber, the ball chamber is used to accommodate the pretensioning ball, the centers of a plurality of ball chambers are located on a preset plane together, a portion of the second curved surface together with the first curved surface is located on one side of the preset plane, the other portion of the second curved surface is located on the other side of the preset plane.

In an optional embodiment, the first curved surface is a concave spherical surface, the second curved surface includes connected first curved subsurface and second curved subsurface, the first curved subsurface being a concave spherical surface and the second curved subsurface being a concave cylindrical surface, the second curved subsurface and the first curved surface are located on the same side of the preset plane, one end of any generatrix of the second curved subsurface is connected to the first curved subsurface and the other end extends towards the first curved surface.

In an optional embodiment, the boundary line between the first curved subsurface and the second curved subsurface is located on a preset plane.

In an optional embodiment, any generatrix on the second curved subsurface is tangent to the first curved subsurface.

In an optional embodiment, the generatrix of the second curved subsurface is parallel to the axis of the ball gear.

In an optional embodiment, the stop wheel comprises a first end and a second end opposite to each other in its own axial direction, the first end and second curved surfaces are arranged in the axial direction of the stop wheel, and compared with the first curved surface, the second curved surface is closer to the first end of the stop wheel, the first end of the stop wheel is connected to the winding component.

In an optional embodiment, the stop wheel comprises a first outer peripheral surface, the ball gear comprises a first inner peripheral surface, the ball gear is sleeved on the outer side of the first outer peripheral surface, and the first inner peripheral surface is radially opposite to the first outer peripheral surface, a limiting portion is provided convexly on one end of the first outer peripheral surface close to the first end of the stop wheel, the limiting portion is used for abutting against the ball gear to restrict the axial movement of the ball gear.

In an optional embodiment, one of the first inner peripheral surface and the first outer peripheral surface is provided with a first protrusion, the other of the first inner peripheral surface and the first outer peripheral surface is provided with a first groove, the first protrusion mates with the first groove.

In an optional embodiment, the second end of the stop wheel is provided with a locking mechanism, the locking mechanism is used to prevent the pretensioning component and the winding component from rotating in the unwinding direction under a predetermined condition.

In an optional embodiment, the winding component comprises a force limiting member and a winding drum, the outer peripheral side of the winding drum is used for winding the seat belt, the winding drum is connected to the first end of the stop wheel via the force limiting member.

In an optional embodiment, the force limiting member is rod-shaped, the first end of the stop wheel is provided with a sleeve-like connecting portion, one end of the force limiting member being in plug-in-fit with the sleeve-like connecting portion; one of the inner wall of the sleeve-like connecting portion and the force limiting member is provided with a second protrusion, the other of the inner wall of the sleeve-like connecting portion and the force limiting member is provided with a second groove, the second protrusion mates with the second groove.

In an optional embodiment, the force limiting member is rod-shaped, wherein the first end of the stop wheel is provided with a sleeve-like connecting portion, one end of the force limiting member is inserted into the sleeve-like connecting portion and is connected to the sleeve-like connecting portion in an anti-torsion manner; the winding drum is sleeved on the outer side of the force limiting member, the end of the force limiting member remote from the stop wheel is connected to the winding drum in an anti-torsion manner.

In an optional embodiment, the seat belt retractor further comprises a frame, to which both the stop wheel and the winding component are rotatably connected.

In an optional embodiment, the seat belt retractor further comprises a gas generator, a pipeline, and a set of pretensioning balls, wherein the gas generator is used for generating gas to propel the pretensioning balls along the pipeline into the ball chambers of the pretensioning components such that the pretensioning components and the winding component have a tendency to rotate in the winding direction.

The beneficial effects of the seat belt retractor provided in embodiments of the present application include:

The seat belt retractor provided in the embodiments of the present application includes a pretensioning component and a winding component connected to the pretensioning component. The winding component is used for winding the seat belt. The pretensioning component includes a stop wheel and a ball gear. The ball gear is sleeved onto the stop wheel in an anti-torsion manner, the stop wheel is provided with a plurality of first curved surfaces arranged in the circumferential direction of the stop wheel. The ball gear is provided with a plurality of second curved surfaces arranged in the circumferential direction of the ball gear, wherein the first curved surfaces and the second curved surfaces are equal in number and correspond one-to-one. Each first curved surface and its corresponding second curved surface together enclose a ball chamber, the ball chamber is used to accommodate the pretensioning ball. The centers of the plurality of ball chambers are located in a preset plane together. A portion of the second curved surface, together with the first curved surface, is located on one side of the preset plane, and the other portion of the second curved surface is located on the other side of the preset plane. In the present application, since the first curved surface forming a portion of the inner wall surface of the ball chamber is formed by the stop wheel, it is only necessary to sleeve a ball gear having the second curved surface on to the stop wheel to form the ball chamber. This type of pretensioning component uses fewer elements and is easy to assemble; the stop wheel itself participates in forming the ball chamber, thus simplifying the transmission relationship and improving reliability. Moreover, compared with the prior art, in the present application, the second curved surface on the ball gear has a longer extension length in the axial direction of the ball gear, such that a portion of the second curved surface is located on the same side of the preset plane as the first curved surface. That is to say, in the axial direction of the ball gear, the second curved surface is simultaneously distributed on both sides of the center point of the ball chamber. By way of this design, the radial component of the force applied by the pretensioning ball to the ball gear after entering the ball chamber can be increased, while the axial component of the applied force can be relatively low. Therefore, it can alleviate the tendency of the ball gear to move away from the first curved surface, increase the locking force between the ball gear and the stop wheel, and prevent the dissipation of pretensioning energy due to the separation of the ball gear and the stop wheel during the pretensioning process, thereby improving the reliability of the pretensioning component.

### BRIEF DESCRIPTION OF THE DRAWINGS

In order to provide a clearer explanation of the technical solution of embodiments of the present application, a brief introduction will be given below to the accompanying drawings required for the embodiments. It should be understood that the following drawings only illustrate certain embodiments of the present application and should not be considered as limiting the scope. For those skilled in the art, other relevant drawings can be obtained based on these drawings without paying creative effort.
Fig. 1 is a schematic view of a pretensioning component in an embodiment of the present application from a first perspective;
Fig. 2 is a schematic view of the pretensioning component in an embodiment of the present application from a second perspective;
Fig. 3 is a schematic view of the pretensioning component in an embodiment of the present application from a third perspective;
Fig. 4 is a cross-sectional view taken in direction A of Fig. 3;
Fig. 5 is a schematic view of a stop wheel in an embodiment of the present application;
Fig. 6 is a schematic view of a ball gear in an embodiment of the present application;
Fig. 7 is an enlarged view of segment VII in Fig. 4;
Fig. 8 is a schematic diagram in an embodiment of the present application, wherein the pretensioning ball is located in the ball chamber;
Fig. 9 is a cross-sectional view taken in direction B of Fig. 8;
Fig. 10 is a schematic diagram of the seat belt retractor of an embodiment of the present application;
Fig. 11 is a schematic diagram of the seat belt retractor of an embodiment of the present application.

Reference signs: 100 - pretensioning component; 110 - stop wheel; 110a - first end; 110b - second end; 111 - sleeve-like connecting portion; 112 - first outer peripheral surface; 113- first groove; 114 - second outer peripheral surface; 115 - second inner peripheral surface; 116 - second protrusion; 117 - accommodating groove; 118 - limiting portion; 119 - shaft head; 120 - ball gear; 121 - first inner peripheral surface; 122 - first protrusion; 130 - ball chamber; 131 - first curved surface; 132 - second curved surface; 1321 - first curved subsurface; 1322 - second curved subsurface; 200 - pretensioning ball; 300 - winding component; 310 - force limiting member; 320 - winding drum; 400 - frame; 410 - gas generator; 420 - pipeline; 500 - locking mechanism.

### DETAILED DESCRIPTION OF PREFERRED EMBODIMENTS

In order to clarify the purpose, technical solution, and advantages of the embodiments of the present application, the technical solution in the embodiments of the present application will be clearly and completely described below in conjunction with the accompanying drawings. Obviously, the described embodiments are a part of the embodiments of the present application, not all of them. Generally, the components of the embodiments of the present application described and illustrated in the accompanying drawings herein can be arranged and designed in various different configurations.

Therefore, the detailed description of the embodiments of the present application provided in the accompanying drawings is not intended to limit the scope of the claimed application, but only to represent selected embodiments of the present application. Based on the embodiments in the present application, all other embodiments obtained by those skilled in the art without creative labor are within the protection scope of the present application.

It should be noted that similar labels and letters represent similar items in the following figures. Therefore, once an item is defined in one figure, it does not need to be further defined and explained in subsequent figures.

In the description of the present application, it should be noted that the use of terms such as "up", "down", "inside", "outside" to indicate orientation or position relationships based on the orientation or position relationships shown in the accompanying drawings, or the orientation or position relationships commonly used when the invention product is in use, is only for the convenience of describing the present application and simplifying the description, and does not indicate or imply that the device or element referred to must have a specific orientation, or be constructed and operated in a specific orientation, and therefore cannot be understood as a limitation of this application.

In addition, if the terms "first", "second", etc., appear, they are only used to distinguish descriptions and cannot be understood as indicating or implying relative importance.

It should be noted that the features in the embodiments of the present application can be combined with each other without conflict.

In related technologies, for example the seat belt retractor as disclosed in the application document with the publication number CN113119905A, the ball chamber is composed of two elements that are sleeved on the stop wheel, and the two elements are respectively connected to the stop wheel in an anti-torsion manner to transmit torque. This type of seat belt retractor uses a large number of elements such that its assembly tends to be complex, at the same time the reliability of transmission would be reduced. Moreover, in the above-mentioned patent, the two spherical surfaces possessed by the two elements that form the ball chamber (due to enclosing the ball chamber) are located on both sides of the center point of the ball chamber in axial direction of the seat belt retractor. This leads to an obvious tendency that when the pretensioning ball enters the ball chamber and squeezes the two spherical surfaces, the two elements tend to move away from each other, this in turn leads to decrease of the reliability of the seat belt retractor.

To this end, the embodiments of the present application provide a seat belt retractor that utilizes a stop wheel and a ball gear to enclose ball chambers, and an axial extension length of the curved surface on the ball gear is increased, such that the seat belt retractor is featured in simple structure and high reliability.

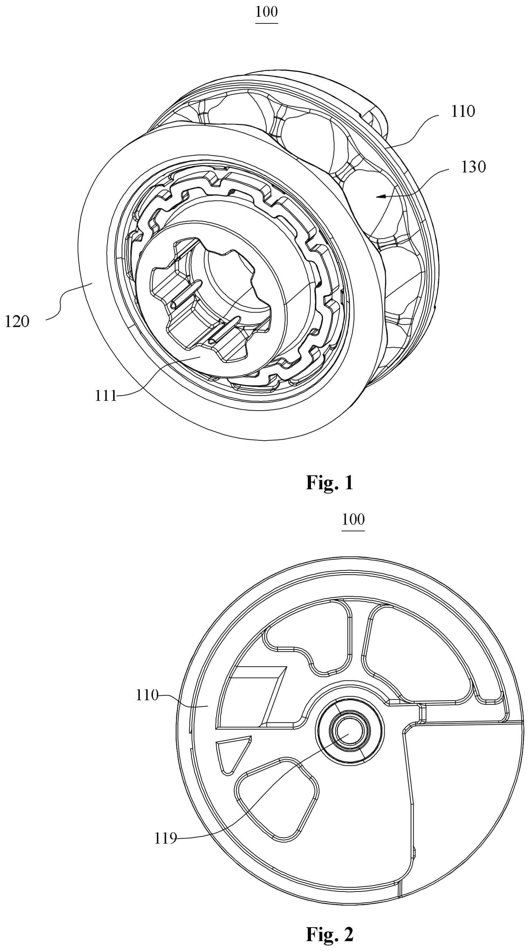

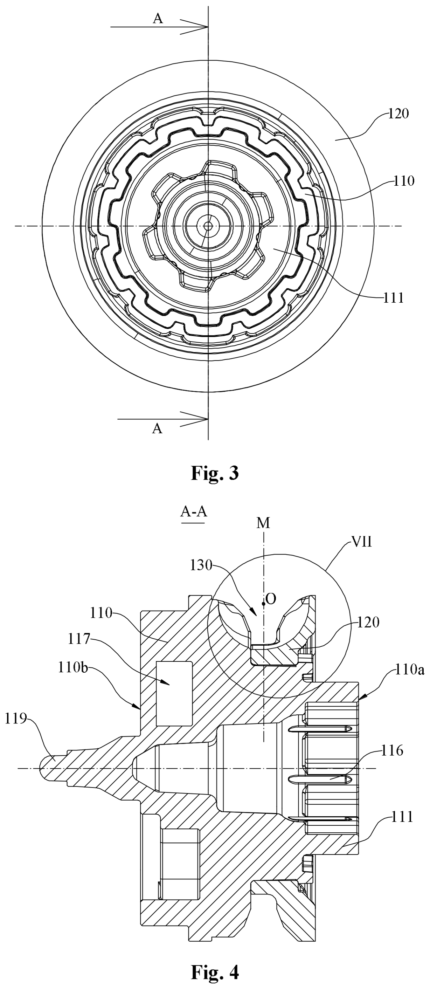

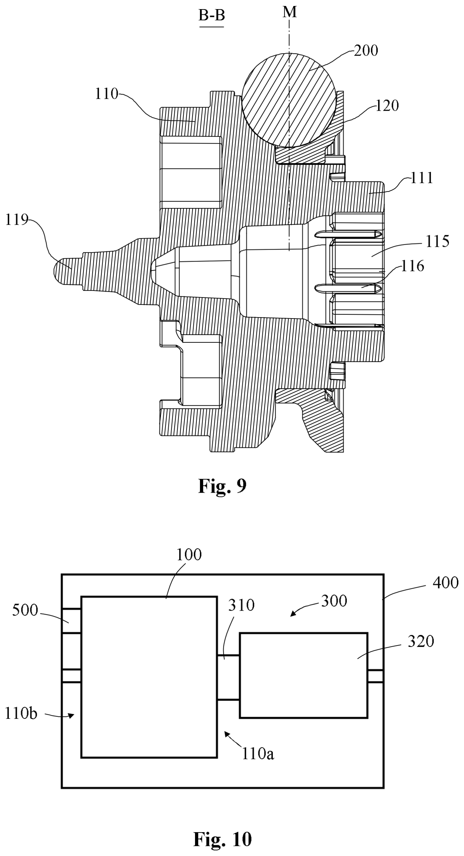

Fig.1 is a schematic view of the pretensioning component 100 in an embodiment of the present application from a first perspective; Fig. 2 is a schematic view of the pretensioning component 100 in an embodiment of the present application from a second perspective; Fig. 3 is a schematic view of the pretensioning component 100 in an embodiment of the present application from a third perspective. As shown in Figs. 1 to 3, the seat belt retractor provided in the embodiment of the present application includes a pretensioning component 100 and a winding component 300 (schematically shown in Fig. 10) connected to the pretensioning component 100, the winding component 300 is used for winding the seat belt. The winding component and the pretensioning component 100 are connected in an anti-torsion manner such that the winding component and the pretensioning component 100 can transmit torques within a certain range. In the present application, "anti-torsion connection" may refer to a status in which two connected components cannot or essentially cannot rotate relative to each other. Due to unintentional gaps (for example, due to manufacturing errors), or due to intentional gaps (for example, intentionally designed idle stroke of several degrees), or due to elasticity of the various parts of the entire connection system, the two connected components may be able to slightly rotate relative to each other or may be able to rotate relative to each other with a predetermined idle stroke. For example, when the two components are welded or bonded together, or are assembled in interference-fit or are produced as a whole, they can rotate together, so that they can be considered to be connected in an anti-torsion manner.

In an embodiment of the present application, the winding component and the pretensioning component 100 can be coaxially arranged, that is, they can rotate along a common axis. When the pretensioning component 100 is not locked, the winding component and the pretensioning component 100 can rotate synchronously. When the winding component rotates, the seat belt can be wound around the outer circumference of the winding component (i.e. winding), or the seat belt can be released from the winding component (i.e. unwinding). Therefore, the winding and unwinding movements of the winding component are two rotational movements in opposite rotation directions, to achieve winding and unwinding of the seat belt. The winding and unwinding movements of the pretensioning component 100 should also be understood as described above.

In an embodiment of the present application, the seat belt retractor may include a frame 400 (schematically shown in Fig. 10), the pretensioning component 100 (which can specifically be a stop wheel 110 described below) and the winding component 300 are both rotatably connected to the frame 400. And the frame 400 can be fixedly connected to other external components to achieve fixing of the seat belt retractor.

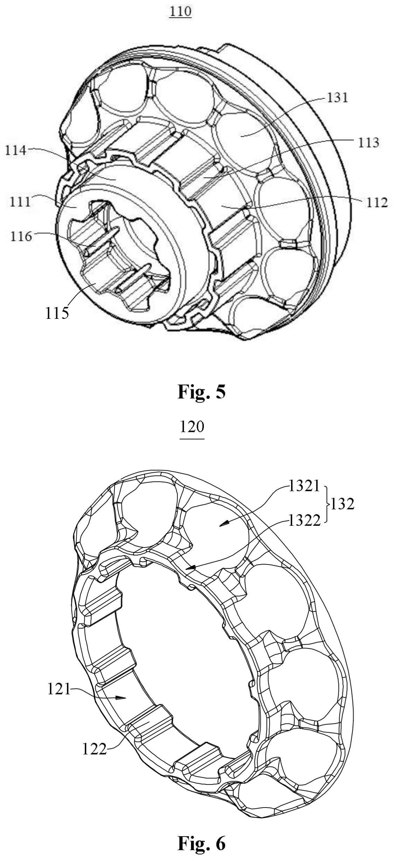

Fig.4 is a cross-sectional view taken in direction A of Fig. 3; Fig. 5 is a schematic view of a ball gear 120 in an embodiment of the present application; Fig. 6 is a schematic view of a stop wheel 110 in an embodiment of the present application. As shown in Figs. 4 to 6, the pretensioning component 100 includes the stop wheel 110 and the ball gear 120. The ball gear 120 is sleeved on the stop wheel 110 in an anti-torsion manner, that is, the ball gear 120 is sleeved onto the stop wheel 110 and cannot or essentially cannot rotate relative to the stop wheel 110. It should be understood that, due to unintentional gaps (for example, due to manufacturing errors), or due to the existence of intentional gaps (for example, due to intentionally designed idle stroke of several degrees), or due to elasticity of various components of the entire connection system, the ball gear 120 may slightly rotate relative to the stop wheel 110 or may rotate relative to the stop wheel 110 with a predetermined idle stroke. The stop wheel 110 is provided with a plurality of first curved surfaces 131 arranged around the circumferential direction of the stop wheel 110, the ball gear 120 is provided with a plurality of second curved surfaces 132 arranged around the circumferential direction of the ball gear 120. The first curved surfaces 131 and the second curved surfaces 132 are equal in number and correspond one-to-one. Each first curved surface 131 and the second curved surface 132 corresponding thereto together enclose a ball chamber 130, the ball chamber 130 is used to accommodate the pretensioning ball 200. Centers O of the plurality of ball chambers 130 are all located on a preset plane (indicated by M in Fig. 4) . In this embodiment, the preset plane M is perpendicular to the rotation axis of the stop wheel 110 and the ball gear 120. In this embodiment, both the first curved surface 131 and the second curved surface 132 are continuous curved surfaces, with a portion of the second curved surface 132 along with the first curved surface 131 located on one side of the preset plane, and the other portion of the second curved surface 132 located on the other side of the preset plane. From Fig. 4, it can be seen that a portion of the ball gear 120 extends beyond the preset plane M and extends to the other side of the preset plane M (i.e., the left side of the preset plane M in Fig. 4).

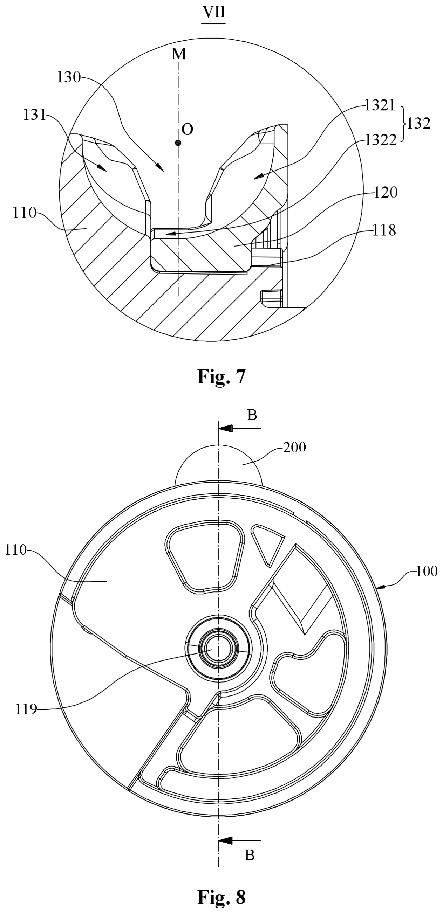

Fig. 7 is an enlarged view of segment VII in Fig. 4; Fig. 8 is a schematic view in an embodiment of the present application, wherein the pretensioning ball 200 is located in the ball chamber 130; Fig. 9 is a cross-sectional view taken along direction B in Fig. 8. In conjunction with Figs. 4 to 9, in an optional embodiment of the present application, the first curved surface 131 is a concave spherical surface; the second curved surface 132 includes first curved subsurface 1321 and second curved subsurface 1322 connected to each other. The first curved subsurface 1321 is a concave spherical surface, and the second curved subsurface 1322 is a concave cylindrical surface. The second curved subsurface 1322 and the first curved surface 131 are located on the same side of the preset plane. One end of any generatrix of the second curved subsurface 1322 is connected to the first curved subsurface 1321, and its other end extends towards the first curved surface 131. By configuring the first curved surface 131 and the first curved subsurface 1321 as concave spherical surfaces, the fit with the pretensioning ball 200 can be increased, improving the space utilization of the ball chamber 130. Optionally, the centers of curvature of the first curved surface 131 and the first curved subsurface 1321 coincide, and the centers of curvature of the first curved surface 131 and the first curved subsurface 1321 are the center O of the ball chamber 130.

It should be understood that the concave cylindrical surface can be obtained by sweeping a generatrix along an extension path of a directrix (perpendicular to the generatrix). In this embodiment, the generatrix of the second curved subsurface 1322 is parallel to the axis of the ball gear 120.

Optionally, any generatrix on the second curved subsurface 1322 is tangent to the first curved subsurface 1321. By configuring the generatrix of the second curved subsurface 1322 to be tangent to the first curved subsurface 1321, there is no kink between the first curved subsurface 1321 and the second curved subsurface 1322, resulting in a smoother transition between the two subsurfaces. In other alternative embodiments, the first curved subsurface 1321 and the second curved subsurface 1322 may have a kink at the connection, which may be an outwardly convex angle or an inwardly concave angle.

In this embodiment, the boundary line between the first curved subsurface 1321 and the second curved subsurface 1322 is located on the preset plane. It can be understood that when the first curved subsurface 1321 of spherical surface intersects with the second curved subsurface 1322 of cylindrical surface, the boundary line should be an arc line. In this embodiment, the plane in which the arc line is located is the preset plane M. Furthermore, since the generatrix of the second curved subsurface 1322 is tangent to the first curved subsurface 1321 and parallel to the axis of the ball gear 120, the point of the first curved subsurface 1321 closest to the axis of the ball gear 120 is located on the boundary line between the first curved subsurface 1321 and the second curved subsurface 1322.

In other alternative embodiments, a portion or all of the boundary line between the first curved subsurface 1321 and the second curved subsurface 1322, together with the first curved surface 131 and the second curved subsurface 1322, may also be located on the same side of the preset plane M; that is, a portion of the first curved subsurface 1321 may extend to the other side of the preset plane M (to the left side of the preset plane M in Fig. 7). In this case, the lowest point of the second curved surface 132 closest to the axis of the ball gear 120 is located on the first curved subsurface 1321. When the pretensioning ball 200 presses the pretensioning component 100 in the axial direction, a portion of the first curved subsurface 1321 that extends beyond the preset plane M will be subjected to an axial component of the force, which can alleviate the tendency of the ball gear 120 to move away from the first curved surface 131, thereby improving the reliability of the ball gear 120.

Optionally, the portion of the ball gear 120 that extends beyond the preset plane M along the axial direction and is used to form the second curved subsurface 1322 can be continuous in the circumferential direction to form an annular structure. In other embodiments, a plurality of solid portions used to form the second curved subsurface 1322 may also be discontinuous in the circumferential direction. In this case, the ball gear 120 exhibits to have a plurality of protrusions arranged at intervals around the circumference and protruding in the axial direction.

Referring again to Figs. 4 to 6, in this embodiment, the stop wheel 110 has a first end 110a and a second end 10b that are opposite to each other in its axial direction. The first curved surface 131 and the second curved surface 132 are arranged in the axial direction of the stop wheel 110, and compared with the first curved surface 131, the second curved surface 132 is closer to the first end 110a of the stop wheel 110. The first end 110a of the stop wheel 110 is connected to the winding component.

Furthermore, the stop wheel 110 comprises a first outer peripheral surface 112, the ball gear 120 comprises a first inner peripheral surface 121. The ball gear 120 is sleeved on the outer side of the first outer peripheral surface 112, and the first inner peripheral surface 121 is radially opposite to the first outer peripheral surface 112. A limiting portion 118 is provided convexly on the first outer peripheral surface 112 at the end close to the first end 110a of the stop wheel 110, the limiting portion 118 is used to abut against the ball gear 120 to restrict the axial movement of the ball gear 120. In this embodiment, the ball gear 120 is sleeved onto the first outer peripheral surface 112 from the first end 110a of the stop wheel 110. The first outer peripheral surface 112 may be in an interference-fit with the first inner peripheral surface 121. Specifically, the limiting portion 118 abuts against the end face of the ball gear 120 facing the winding component, such that the ball gear 120 cannot move towards the first end 110a of the stop wheel 110 due to the obstruction of the limiting portion 118. Optionally, the limiting portion 118 can be obtained from plastic deformation of the stop wheel 110 caused by applying external force to the stop wheel, therefore the entire stop wheel 110 is of a one-piece structure. For example, when assembling the pretensioning component 100, the ball gear 120 can be sleeved on from the first end 110a of the stop wheel 110 and then a force can be applied to cause plastic deformation of the first end 110a of the stop wheel 110, thereby locking the ball gear 120 on the outer side of the first outer peripheral surface 112. Optionally, the stop wheel 110 and the ball gear 120 can be made of metal materials (including alloys), the ball gear 120 can be achieved through cold forming technology.

In this embodiment, the stop wheel 110 and the ball gear 120 can be engaged to each other via spline fit, thereby achieving anti-torsion connection between them. Optionally, one of the first inner peripheral surface 121 and the first outer peripheral surface 112 is provided with first protrusions 122, and the other of the first inner peripheral surface 121 and the first outer peripheral surface 112 is provided with first grooves 113, with the first protrusion 122 mating with the first groove 113. For example, in this embodiment, the first protrusion 122 is provided on the first inner peripheral surface 121, and the first groove 113 mating with the first protrusion 122 is provided on the first outer peripheral surface 112. Optionally, the first protrusion 122 and the first groove 113 are in interference fit. It can be understood that in other embodiments, other connection relationships can be used between the stop wheel 110 and the ball gear 120, for example, the first inner peripheral surface 121 and the first outer peripheral surface 112 are in interference fit, the anti-torsion connection is achieved merely relying only on the friction therebetween; alternatively, one end of the ball gear 120 in the axial direction is provided with a protrusion, which is in axial direction in plug-in connection with the corresponding groove provided on the stop wheel 110; alternatively, the ball gear 120 can be connected to the stop wheel 110 in anti-torsion manner through bonding or welding.

Optionally, as sschematically hown in Fig. 10, the winding component 300 includes a force limiting member 310 and a winding drum 320. The outer peripheral side of the winding drum 320 is used for winding the seat belt, and the winding drum 320 is connected to the first end 110a of the stop wheel 110 through the force limiting member 310. It should be understood that the force limiting member 310 is used to transmit torque, so that during the pretensioning stage or during normal winding and unwinding of the seat belt, the winding drum can rotate synchronously with the pretensioning component 100; in addition, the force limiting member can also maintain torque without further increasing after the torque reaches a certain threshold. For example, when the force limiting member transmits a relative low torque, the deformation of the force limiting member itself is elastic deformation; when the transmitted torque increases to the threshold, the force limiting member goes through plastic deformation, such that the torque would no longer rise and the corresponding pull-out force of the seat belt remains constant, thereby reducing the compression of the seat belt on the vehicle occupant's chest and providing better protection.

Optionally, the force limiting member 310 is rod-shaped, and the first end 110a of the stop wheel 110 is provided with a sleeve-like connecting portion 111. One end of the force limiting member is plug-in fitted with the sleeve-like connecting portion 111. Optionally, the force limiting member can be engaged to the sleeve-like connecting portion 111 via spline fit to achieve the anti-torsion connection. Optionally, one of an inner wall of the sleeve-like connecting portion 111 and the force limiting member is provided with a second protrusion 116, and the other of the inner wall of the sleeve-like connecting portion 111 and the force limiting member is provided with a second groove, with the second protrusion 116 mating with the second groove. In this embodiment, the sleeve-like connecting portion 111 is connected to the force limiting member using a spline structure. At the same time, the second protrusion 116 is also provided on a protruding portion on the second inner peripheral surface 115, and the second protrusion 116 extends in the axial direction of the stop wheel 110 for mating with the second groove on the force limiting member.

By connecting the force limiting member 310 to the stop wheel 110, torque can be transmitted through the winding drum, the force limiting member, and the stop wheel 110; in other alternative embodiments, the force limiting member can also be connected to the ball gear 120 in anti-torsion manner, and torque is transmitted through the winding drum, the force limiting member, the ball gear 120, and the stop wheel 110.

Furthermore, the winding drum 320 is sleeved on the outer side of the force limiting member310, and the end of the force limiting member 310 away from the stop wheel 110 is connected to the winding drum 320 in an anti-torsion manner. Optionally, the sleeve-like connecting portion also comprises a second outer peripheral surface 114, the diameter of the second outer peripheral surface 114 is smaller than the diameter of the first outer peripheral surface 112. The end of the winding drum near the pretensioning component 100 is provided with a second inner peripheral surface, which can be sleeved on the outside of the second outer peripheral surface 114. Moreover, without considering the anti-torsion connection effect of the force limiting member, the winding drum can rotate relative to the sleeve-like connecting portion.

In this embodiment, the second end 110b of the stop wheel 110 is provided with a locking mechanism 500 (schematically shown in Fig. 10), which is used to, under a predetermined condition, prevent the pretensioning component 100 and the winding component from rotating in the unwinding direction. The predetermined condition can be that the speed of the unwinding motion of the pretensioning component 100 and the winding component is higher than a preset threshold, which means that when the seat belt is pulled out too quickly (in actual use, the vehicle may undergo collision at this time), the locking mechanism can lock the pretensioning component 100 such that the pretensioning component 100 cannot continue rotating; since there is anti-torsion connection between the winding component and the pretensioning component 100, the winding component will also stop the unwinding motion along with the pretensioning component 100 within a certain torque range, causing the already pulled out seat belt to be tensioned.

Optionally, a second section of the stop wheel 110 can be provided with a locking claw (not shown in the figures), and a locking piece (not shown in the figures) can be fixedly mounted on the frame. The locking claw can move relative to the stop wheel 110 within a certain stroke, thereby engaging or disengaging with the locking piece. In the case where the locking claw is engaged with the locking piece, the stop wheel 110 will be unable to perform unwinding motion due to the blocking effect of the locking piece. The locking claw is connected to a pretensioning spring, the locking claw can be kept disengaged from the locking piece under the elastic force of the pretensioning spring, and can be engaged with the locking piece to lock the stop wheel 110 in the case where the spring force of the pretensioning spring is overcome. Optionally, the locking claw can be a pawl, and a ratchet can be provided on the locking piece. The locking claw can overcome the elastic force of the pretensioning spring through centrifugal force when the stop wheel 110 performs unwinding motion and the rotation speed reaches a certain level, thereby engaging with the locking piece to realize locking of the stop wheel 110. In this embodiment, the stop wheel 110 is provided with an accommodating groove 117 for receiving the locking claw.

In addition, the seat belt retractor can also include a vehicle sensing device (not shown in the figure) connected to the stop wheel 110. The vehicle sensing device can detect safety related states of the motor vehicle, such as vehicle acceleration and vehicle tilt angle, and can cause locking of the stop wheel 110 when the vehicle acceleration or vehicle tilt angle exceeds the respective threshold, thereby preventing the seat belt from continuing to be pulled out from the winding component. The vehicle sensing device can be operatively connected to the locking mechanism, such that when it is detected that the vehicle fulfills the predetermined condition, the locking mechanism is prompted to lock the locking wheel 110.

In this embodiment, the second end 10b of the stop wheel 110 is also convexly provided with a shaft head 119, the shaft head 119 can be rotatably connected to the frame to support the pretensioning component 100.

The seat belt retractor provided in the embodiments of the present application can further comprise a coil spring (not shown in the figures), which is used to provide elastic force to the winding component and/or the pretensioning component 100 such that the winding component has a tendency to the winding motion. This enables the seat belt to be kept under tension during normal use of the seat belt retractor and to be retracted as much as possible when the seat belt is not in use.

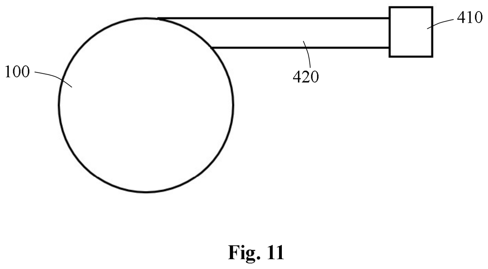

Furthermore, the seat belt retractor also includes a gas generator 410 (schematically shown in Fig. 11), a pipeline 420 (schematically shown in the Fig. 11), and a set of pretensioning balls 200. The gas generator 410 is used to generate gas to propel the pretensioning balls 200 along the pipeline 420 into the ball chambers 130 of the pretensioning component 100 such that the pretensioning component 100 and the winding component have tendency to rotate in the winding direction. In a specific scenario, when an abnormality of a vehicle is detected (such as excessive acceleration and/or excessive tilt detected by the vehicle sensing device), the gas generator 410 can be triggered. When the gas generator is triggered, gas is generated to push the pretensioning ball 200 along the pipeline into the ball chambers 130 of the pretensioning component 100 and the inertia of the pretensioning ball 200 causes the pretensioning component 100 to rotate in the winding direction, then the winding component performs winding motion together under the driving of the pretensioning component 100 to tighten the seat belt and achieve the pretensioner function. The pretensioning component 100 may also comprise a ball accumulator (not shown in the figures), which can prevent the pretensioning ball 200 entering the ball chamber 130 and the flame and debris generated by the gas generator from being discharged into the internal space of the vehicle.

In summary, the embodiments of the present application provide a seat belt retractor. The seat belt retractor includes a pretensioning component 100 and a winding component connected to the pretensioning component 100. The winding component is used for winding the seat belt. The pretensioning component 100 includes a stop wheel 110 and a ball gear 120. The ball gear 120 is sleeved onto the stop wheel 110 in an anti-torsion manner, the stop wheel 110 is provided with a plurality of first curved surfaces 131 arranged in the circumferential direction of the stop wheel 110. The ball gear 120 is provided with a plurality of second curved surfaces 132 arranged in the circumferential direction of the ball gear 120, wherein the first curved surfaces 131 and the second curved surfaces 132 are equal in number and correspond one-to-one. Each first curved surface 131 and its corresponding second curved surface 132 together enclose a ball chamber 130, the ball chamber 130 is used to accommodate the pretensioning ball 200. The centers of the plurality of ball chambers 130 are located in a preset plane together. Both the first curved surface 131 and the second curved surface 132 are continuous surfaces. A portion of the second curved surface 132, together with the first curved surface 131, is located on one side of the preset plane, and the other portion of the second curved surface 132 is located on the other side of the preset plane. In the present application, since the first curved surface 131 forming a portion of the inner wall surface of the ball chamber 130 is formed by the stop wheel 110, it is only necessary to sleeve a ball gear 120 having the second curved surface 132 on to the stop wheel 110 to form the ball chamber 130. This type of pretensioning component 100 uses fewer elements and is easy to assemble; the stop wheel 110 itself participates in forming the ball chamber 130, thus simplifying the transmission relationship and improving reliability. Moreover, compared with the prior art, in the present application, the second curved surface 132 on the ball gear 120 has a longer extension length in the axial direction of the ball gear 120, such that a portion of the second curved surface 132 is located on the same side of the preset plane as the first curved surface 131. That is to say, in the axial direction of the ball gear 120, the second curved surface 132 is simultaneously distributed on both sides of the center point of the ball chamber 130. By way of this design, the radial component of the force applied by the pretensioning ball 120 to the ball gear 120 after entering the ball chamber 130 can be increased, while the axial component of the applied force can be relatively low. Therefore, it can alleviate the tendency of the ball gear 120 to move away from the first curved surface 131, increase the locking force between the ball gear 120 and the stop wheel 110, and prevent the dissipation of pretensioning energy due to the separation of the ball gear and the stop wheel during the pretensioning process, thereby improving the reliability of the pretensioning component 100.

The above is only a specific implementation of the present application, but the protection scope of the present application is not limited to this. Any changes or replacements that can be easily conceived of by those skilled in the art within the technical scope disclosed in the present application should be included in the protection scope of the present application.

## Claims

1. A seat belt retractor, **characterized in that** the seat belt retractor comprises a pretensioning component (100) and a winding component (300) connected to the pretensioning component (100), wherein the winding component is used for winding the seat belt, wherein the pretensioning component (100) includes a stop wheel (110) and a ball gear (120), wherein the ball gear (120) is sleeved on the stop wheel (110) in an anti-torsion manner, wherein the stop wheel (110) is provided with a plurality of first curved surfaces (131) arranged in the circumferential direction of the stop wheel (110), wherein the ball gear (120) is provided with a plurality of second curved surfaces (132) arranged in the circumferential direction of the ball gear (120), wherein the first curved surfaces (131) and the second curved surfaces (132) are equal in number and correspond one-to-one, wherein each first curved surface (131) and its corresponding second curved surface (132) together enclose a ball chamber (130) for accommodating a pretensioning ball (200), wherein the centers of a plurality of ball chambers (130) are located on a preset plane together, wherein a portion of the second curved surface (132) together with the first curved surface (131) is located on one side of the preset plane, wherein the other portion of the second curved surface (132) is located on the other side of the preset plane.

2. The seat belt retractor according to claim 1, **characterized in that** the first curved surface (131) is a concave spherical surface, wherein the second curved surface (132) includes connected first curved subsurface (1321) and second curved subsurface (1322),the first curved subsurface (1321) being a concave spherical surface and the second curved subsurface (1322) being a concave cylindrical surface, wherein the second curved subsurface (1322) and the first curved surface (131) are located on the same side of the preset plane, wherein one end of any generatrix of the second curved subsurface (1322) is connected to the first curved subsurface (1321) and the other end extends towards the first curved surface (131).

3. The seat belt retractor according to claim 2, **characterized in that** the boundary line between the first curved subsurface (1321) and the second curved subsurface (1322) is located on the preset plane.

4. The seat belt retractor according to claim 2, **characterized in that** any generatrix on the second curved subsurface (1322) is tangent to the first curved subsurface (1321).

5. The seat belt retractor according to claim 2, **characterized in that** the generatrix of the second curved subsurface (1322) is parallel to the axis of the ball gear (120).

6. The seat belt retractor according to any one of claims 1 to 5, **characterized in that** the stop wheel (110) comprises a first end (110a) and a second end (110b) opposite to each other in its own axial direction, wherein the first curved surface (131) and the second curved surface (132) are arranged in the axial direction of the stop wheel (110), and wherein compared with the first curved surface (131), the second curved surface (132) is closer to the first end (110a) of the stop wheel (110), wherein the first end (110a) of the stop wheel (110) is connected to the winding component.

7. The seat belt retractor according to claim 6, **characterized in that** the stop wheel (110) comprises a first outer peripheral surface (112), wherein the ball gear (120) comprises a first inner peripheral surface (121), wherein the ball gear (120) is sleeved on the outer side of the first outer peripheral surface (112), and wherein the first inner peripheral surface (121) is radially opposite to the first outer peripheral surface (112), wherein a limiting portion (118) is provided convexly on one end of the first outer peripheral surface (112) close to the first end (110a) of the stop wheel (110), wherein the limiting portion (118) is used for abutting against the ball gear (120) to restrict the axial movement of the ball gear (120).

8. The seat belt retractor according to claim 7, **characterized in that** one of the first inner peripheral surface (121) and the first outer peripheral surface (112) is provided with a first protrusion (122), and that the other one of the first inner peripheral surface (121) and the first outer peripheral surface (112) is provided with a first groove (113), wherein the first protrusion (122) mates with the first groove (113).

9. The seat belt retractor according to claim 6, **characterized in that** the second end (110b) of the stop wheel (110) is provided with a locking mechanism (500), wherein the locking mechanism is used to prevent the pretensioning component (100) and the winding component from rotating in the unwinding direction under a predetermined condition.

10. The seat belt retractor according to any one of claims 1-5, **characterized in that** the winding component comprises a force limiting member (310) and a winding drum (320), wherein the outer peripheral side of the winding drum is used for winding the seat belt, wherein the winding drum is connected to the first end (110a) of the stop wheel (110) via the force limiting member.

11. The seat belt retractor according to claim 10, **characterized in that** the force limiting member is rod-shaped, wherein the first end (110a) of the stop wheel (110) is provided with a sleeve-like connecting portion (111), one end of the force limiting member being in plug-in-fit with the sleeve-like connecting portion (111); wherein one of the inner wall of the sleeve-like connecting portion (111) and the force limiting member is provided with a second protrusion (116), wherein the other one of the inner wall of the sleeve-like connecting portion (111) and the force limiting member is provided with a second groove, wherein the second protrusion (116) mates with the second groove.

12. The seat belt retractor according to claim 10, **characterized in that** the force limiting member is rod-shaped, wherein the first end (110a) of the stop wheel (110) is provided with a sleeve-like connecting portion (111), wherein one end of the force limiting member is inserted into the sleeve-like connecting portion (111) and is connected to the sleeve-like connecting portion (111) in an anti-torsion manner; wherein the winding drum is sleeved on the outer side of the force limiting member, wherein the end of the force limiting member remote from the stop wheel (110) is connected to the winding drum in an anti-torsion manner.

13. The seat belt retractor according to any one of claims 1 to 5, **characterized in that** the seat belt retractor further comprises a frame (400), to which both the stop wheel (110) and the winding component are rotatably connected.

14. The seat belt retractor according to any one of claims 1 to 5, **characterized in that** the seat belt retractor further comprises a gas generator (410), a pipeline (420), and a set of pretensioning balls (200), wherein the gas generator is used for generating gas to propel the pretensioning balls (200) along the pipeline into the ball chambers (130) of the pretensioning components (100) such that the pretensioning components (100) and the winding component have a tendency to rotate in the winding direction.
